(19) Europäisches Patentamt
European Patent Office
Office européen des brevets

(11) **EP 3 485 963 A1**

## (12) EUROPEAN PATENT APPLICATION
published in accordance with Art. 153(4) EPC

(43) Date of publication:
**22.05.2019 Bulletin 2019/21**

(21) Application number: **17830525.6**

(22) Date of filing: **13.07.2017**

(51) Int Cl.:
**B01D 53/62** $^{(2006.01)}$     **C01D 7/10** $^{(2006.01)}$

(86) International application number:
**PCT/ES2017/000091**

(87) International publication number:
**WO 2018/015581 (25.01.2018 Gazette 2018/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **19.07.2016 ES 201600616**

(71) Applicant: **Universidad De Sevilla**
**41013 Sevilla (ES)**

(72) Inventors:
- **CHACARTEGUI RAMIREZ, Ricardo**
  **41092 Sevilla (ES)**
- **BECERRA VILLANUEVA, José Antonio**
  **41092 Sevilla (ES)**
- **VALVERDE MILLÁN, José Manuel**
  **41012 Sevilla (ES)**
- **BONAVENTURA, Davide**
  **41092 Sevilla (ES)**

(74) Representative: **Carvajal y Urquijo, Isabel et al**
**Clarke, Modet & Co.**
**Suero de Quiñones, 34-36**
**28002 Madrid (ES)**

(54) **INTEGRATED CO2 CAPTURE SYSTEM AND PRODUCTION OF SODIUM (NaHCO3) FROM TRONA (Na2CO3-2H2O - NaHCO3)**

(57)     The present invention presents an integrated system for the production of $Na_2HCO_3$ from $CO_2$ captured from industries or power plants by means of a dry carbonate process starting from trona as raw material ($Na_2CO_3$ - $NaHCO_3$ - $2H_2O$) and converting it into sodium carbonate ($Na_2CO_3$).

The optimized integration of the unit allows coupling the system with renewable energies at medium temperatures below 220ºC, such as biomass or medium temperature solar thermal energy systems. The use of this invention integrated in a $CO_2$ emitting plant results in a global system of almost zero $CO_2$ emissions, being able to meet the heat requirements of the global integrated system, minimizing the energy consumption of the $CO_2$ capture system and conversion to bicarbonate. This optimized integration reduces the energy and economic penalty of integrating the $CO_2$ capture system and conversion to value-added chemical.

Figure 1

**Description**

**TECHNICAL FIELD**

The invention falls within the technical sector of $CO_2$ capture and storage (CCS), specifically with regard to $CO_2$ capture in power plants and industrial processes and its subsequent use (CCU) for the production of chemicals of industrial interest. This invention integrates the processes of $CO_2$ capture and production of sodium bicarbonate with the support of renewable energy, biomass or solar energy at medium temperature (<220 ºC), resulting in a global system of almost zero emissions with a reduced energy penalty and low cost.

**STATE OF THE ART**

$CO_2$ capture and storage has a great growth potential on a global scale due to the urgent need to reduce greenhouse gas emissions in order to mitigate global warming. The $CO_2$ capture processes developed in recent years at research and development (R&D) level have as main objectives the reduction of their costs and their energy requirements, so as to reduce or eliminate the energy and economic penalties associated with the integration of $CO_2$ capture systems. Currently, the only commercially available post combustion $CO_2$ capture technology is based on the chemical absorption of $CO_2$ by amines [1].

The process of $CO_2$ capture by dry sodium carbonate (dry carbonation process) is based on the chemical adsorption of $CO_2$ into sodium carbonate. By adsorption the sodium carbonate ($Na_2CO_3$) is converted to sodium bicarbonate ($NaHCO_3$) or an intermediate salt ($Na_2CO_3 - 3NaHCO_3$) by chemical reaction with $CO_2$ and steam[2]. The sorbent regenerates back to its carbonate form ($Na_2CO_3$) when heated, thus releasing an almost pure $CO_2$ flow after steam condensation. $CO_2$ adsorption occurs at low operating temperature (T <80 °C) while sorbent regeneration takes place at higher temperatures but also at relatively low temperatures (T> 100 °C). For the complete regeneration of the sorbent in a sufficiently fast way it is enough to operate with temperatures of the order of 200 °C.

Different patents describe processes and improvements to optimize the carbonation of $Na_2CO_3$, which is exothermic [3,4]. The management of this heat released in the reactor is essential to effectively implement the process in a commercial system minimizing the energy penalty of the process in which it is integrated.

On the other hand, there are different production processes for sodium bicarbonate, an intermediate solvent in the dry carbonate process. SOLVAY's patent for the production of sodium bicarbonate ES2409084 (A1) [5], describes a procedure for producing sodium bicarbonate from a stream carrying sodium carbonate, part of which is generated by a crystallizer, where that stream carries sodium carbonate (A) with at least 2% by weight of sodium chloride and/or sodium sulphate. The process includes an aqueous dissolution process, generation of sodium bicarbonate crystals and their separation. Patent US2015175434 (A1) [6] describes a process for the joint production of sodium bicarbonate and other alkaline compounds in which $CO_2$ is generated as an intermediate product that can be used to replenish the production phase of sodium bicarbonate.

$Na_2CO_3$ can be obtained from the decomposition of the natural mineral trona ($Na_2CO_3 - NaHCO_3 - 2H_2O$), composed of sodium carbonate ($Na_2CO_3$) in approximately 46% and sodium bicarbonate ($NaHCO_3$) in 35% by weight and widely available. The region of the world with the highest production of this mineral is Wyoming (United States) whose mines produced more than 17 million tons of trona. The US Geological Survey in 1997 estimated that the total trona reserve is 127 million tonnes, although only 40 million tonnes are recoverable [7]. Trona is stable up to 57 °C dry, and creates intermediate compounds such as wegschiderite ($Na_2CO_3 - 3NaHCO_3$) and sodium monohydrate ($Na_2CO_3 - H_2O$) between 57 °C and 160 °C [8]. Above 160 ºC, tron a decomposes to Na2C03 [9].

A relevant technological challenge is the development of a method for the conversion of the $Na_2CO_3$ fraction in the trona into a commercial value-added product such as sodium bicarbonate ($NaHCO_3$) that is profitable.

The generation of sodium bicarbonate from trona is described in different patents [10-11]. Patent US2013095011 (A1) [12] describes a process for the production of sodium carbonate and sodium bicarbonate from trona. It includes the grinding of the trona and its dissolution in a solution with sodium carbonate and an additive that generates solid particles suspended in the aqueous solution and that can be separated.

For the generation of sodium bicarbonate crystals from trona in WO2013106294 (A1) [13] a process for the production of sodium bicarbonate crystals from trona and water is described; US2011064637 (A1) [14] a process for the joint production of sodium carbonate and sodium bicarbonate crystals from sodium sesquicarbonate powder is described. The process uses a suspension of water and a gas containing $CO_2$. In US2009238740 (A1) [15] is presented a method of preparing sodium bicarbonate from trona containing sodium fluoride as impurity by preparing a trona solution and introducing $CO_2$ until the solution reaches a pH in the range of 7.5 to 8.75 precipitating the sodium carbonate in the trona solution. US2006182675 (A1) [16] contains a process for the production of bicarbonate obtained from trona including the stages of purification, evaporation-decarbonation, crystallization, centrifugation and drying. In US2004057892 (A1)[17] a method for producing sodium bicarbonate from trona ore is patented. The process uses the effluent water stream from the conversion of trona to sodium carbonate as a supply for the conversion of sodium carbonate to sodium bicarbonate.

The current state of the art for the production of $NaHCO_3$ from trona can be summarized as follows. A vertical tubular reactor with a perforated bottom that separates the upper fluidization chamber from a lower stagnation chamber is fed with ground natural trona. A stream of gas is passed through the stagnation chamber in upward direction through the perforated bottom into the fluidization chamber at a speed high enough to hold a portion of the load in suspension, and to carry away decomposition gases, such as steam and $CO_2$, that are generated during the reaction. The fluidized bed reactor acts both as a calciner for the trona and as a separator of the fine trona particles from the coarse portion of the load remaining suspended in the fluidized bed.

The thermal energy required to convert the raw material (trona) into raw sodium carbonate can be supplied by heating the fluidization gas or by placing internal heating devices or around the fluidized bed, preferably within the fluidized bed. The temperature of the fluidized bed must be in the range of 140°- 220° C [8]. The reaction that takes place in the fluidized bed reactor is:

$$2(Na_2CO_3 \cdot NaHCO_3 \cdot 2H_2O)_{(s)} \rightarrow 3Na_2CO_{3(s)} + CO_{2(g)} + 5H_2O_{(g)}$$

$$\Delta H_{298K} = 133,9 \frac{KJ}{mol} \, [9]$$

For the production of sodium bicarbonate the intermediate $Na_2CO_3$ solution is centrifuged to separate the liquid from the crystals. The crystals are then dissolved in a carbonate solution (a solution of $Na_2CO_3$) in a rotating diluter, thus becoming a saturated solution. This solution is filtered to remove any insoluble material and then pumped through a feed tank to the top of a carbonation tower. The purified $CO_2$ is introduced into the lower part of the carbonation tower and remains pressurized. As the saturated sodium solution evolves through the carbonator, it cools and reacts with the $CO_2$ to form sodium bicarbonate crystals. These crystals are collected at the bottom of the reactor and transferred to another centrifuge, where the excess solution is separated by filtration. The crystals are then washed in a bicarbonate solution, forming a cake-like substance ready for drying in the filtrate. The filtrate removed from the centrifuge is recycled into the rotary dilution vessel, where it is used to saturate more intermediate $Na_2CO_3$ crystals. The washed filter cake is then dried either on a continuous belt conveyor or in a flash dryer.

In the carbonation tower, the saturated solution of $Na_2CO_3$ evolves from the top to the bottom. As it falls, the solution cools and reacts with the $CO_2$ to form $NaHCO_3$ crystals. After filtration, washing and drying, the crystals are sorted by particle size and packed properly. The reaction that takes place in the carbonation tower is:

$$Na_2CO_{3(s)} + CO_{2(g)} + H_2O_{(g)} \leftrightarrow 2NaHCO_3$$

$$\Delta H_{298K} = 129,09 \frac{kJ}{mol} \qquad [11]$$

The heat required in this endothermic process can be supplied by fossil fuels or renewable sources such as solar energy or biomass. Since the operating temperature is moderate (200ºC) a low cost parabolic trough (PTC) system could be used to supply the heat required for endothermic reactions. The parabolic trough concentrator (PTC) is a solar concentrator technology that converts solar radiation into thermal energy in the receiver by means of a linear focusing system. The applications of PTC parabolic trough systems can be divided into two main groups. The first and most developed is associated with concentrated solar power (CSP) plants for the generation of electricity using temperatures relatively around 300-400 ºC. The second group of applications is associated with the supply of thermal energy in applications that require temperatures in the range 85 -250 °C. The second group of applications is associated with the supply of thermal energy in applications that require temperatures in the range 85 -250 °C. The second gr oup of applications is associated with the supply of thermal energy in applications that require temperatures in the range 85 -250 °C. These applications, which mainly use heat from industrial processes, can be cleaning, drying, evaporation, distillation, pasteurization, sterilization, among others, as well as applications with low temperature heat demand and high consumption rates (domestic hot water, heating, heated swimming pools), as well as heat-based cooling [18]. Currently the term medium temperature collectors is used to refer to collectors operating in the range of 80-250 °C.

Regarding $CO_2$ capture systems with production of sodium bicarbonate, in US20100028241A1 [20] and WO2009029292A1 [21] there is a reaction system for partial carbon capture ($CO_2$ and CO) in coal plants and production of hydrogen and hydrogen compounds from sodium chloride NaCl, coal and water. Sodium hydroxide generated from chloride is used to produce sodium carbonate and bicarbonate. Chemical reactions between gases, hydroxide, carbon or natural gas produce solid carbonate and hydrogen, valuable substances that can be sold or used to generate electricity. WO2011075680A1 [22] describes a process by which $CO_2$ is absorbed by an aqueous caustic mixture and then reacted with hydroxide to form carbonate/bicarbonate. This involves the use of a liquid mixture separation process and the use of an electrolysis process. In patent US20060185985A1 [23] the same process of using hydroxide and electrolysis to obtain carbonate and bicarbonate from $CO_2$ captured by an aqueous mixture is presented. These aqueous $CO_2$ capture solutions are described in patent US20100051859A1 [24] in which water is processed to generate an acidic solution and an alkaline solution that captures the $CO_2$.

The invention presented in this document consists of the synergistic integration of: i) a $CO_2$ capture system based on the use of trona as a precursor of $Na_2CO_3$ that will be used as a $CO_2$ sorbent; ii) $CO_2$ capture of effluent gases through a dry carbonate capture process (dry carbonation process), therefore not based on aqueous solutions such as the above-mentioned patents; iii) production process of sodium bicarbonate as a product that can be partly reused in the capture process and the rest can be in other applications.

This synergistic integration of both processes has several advantages such as: i) energy consumption allows the integration with heat sources for sorbent regeneration based on renewable energies such as biomass or medium temperature solar energy (<220ºC); ii) sorbent: the bicarbonate produced in the process allows the regeneration of the raw material used in the $CO_2$ capture process while the excess of bicarbonate produced is a chemical product with economic value and whose sale could reduce the economic penalty of the plant; iii)) the proposed integration using as heat sources renewable energy (solar, biomass, wind) results in global systems of zero $CO_2$ emissions with a reduced penalty of the integrated system performance and with a low energy penalty.

References

[1] Spigarelli BP, Kawatra SK. Opportunities and challenges in carbon dioxide capture. J CO2 Util 2013;1:69-87. doi:10.1016/j.jcou.2013.03.002.

[2] Nelson, T. O., Coleman, L. J., Green, D. A., & Gupta, R. P. (2009). The dry carbonate process: carbon dioxide recovery from power plant flue gas. Energy Procedia, 1(1), 1305-1311.

[3] Krieg, J.P., and Winston, A.E. 1984. Dry Carbonation Process. U.S. Patent 4,459,272, assigned to Church & Dwight Co., Inc., filed April 26, 1983, and issued July 10, 1984.

[4] Falotico, A.J. 1993. Dry Carbonation of Trona. PCT Application No.: PCT/US1992/006321 (WO1993/011070), assigned to Church & Dwight Company, Inc., June 10.

5] WALRAVENS HUGO; ALLEN KURT; CHAU THOI-DAI ;VANDENDOREN ALAIN, "PROCEDURE TO PRODUCE SODIUM BICARBONATE" Spanish Patent ES2409084 (A1),

6] KISIELEWSKI JAMES C; HANSEN DAVID M, PRODUCTION OF CRYSTALLINE SODIUM BICARBONATE USING CO2 RECOVERED FROM ANOTHER ALKALI PRODUCTION PROCESS U.S. Patent No . US2015175434 (A1)

[7] Harris RE. Fifty Years of Wyoming Trona Mining 1997:177-82.

[8] Gärtner RS, Witkamp GJ. Wet calcining of trona (sodium sesquicarbonate) and bicarbonate in a mixed solvent. J Cryst Growth 2002;237:2199-204. doi:10.1016/S0022-0248(01)02275-8.

[9] Kim NK, Srivastava R, Lyon J. Simulation of an industrial rotary calciner with trona ore decomposition 2002.

[10] Sproul, Jared Sanford, and Eric Rau. "Process for producing sodium carbonate from trona." U.S. Patent No. 3,869,538. 4 Mar. 1975.

[11] Turner, Allan L. "Process for producing sodium carbonate from trona ore." U.S. Patent No. 6,010,672. 4 Jan. 2000.

12] BRETON CLAUDE; CHAU THOI-DAI; PIET JOFFREY, PROCESS FOR THE JOINT PRODUCTION OF SODIUM

*CARBONATE AND SODIUM BICARBONATE,* U.S. Patent No. US2013095011 (A1)

*13] BRACILOVIC DRAGOMIR M; KURTZ ANDREW D; PALUZZI JOSEPH A; SENK ZBIGNIEW M BOUNDARY LAYER CARBONATION OF TRONA, WO Patent No.* WO2013106294 (A1)

*14] DAVOINE PERRINE; COUSTRY FRANCIS M; DETOURNAY JEANPAUL; ALLEN KURT, PROCESS FOR THE JOINT PRODUCTION OF SODIUM CARBONATE AND SODIUM BICARBONATE, U.S. Patent No.* US2011064637 (A1)

*15] SENSARMA SOUMEN; PHADTARE SUMANT; SASTRY MURALI, METHOD OF REMOVING FLUORIDE IMPURITIES FROM TRONA AND PREPARATION OF SODIUM BICARBONATE, U.S. Patent No .* US2009238740 (A1)

*16] CEYLAN ISMAIL; UGURELLI ALI; DILEK NOYAN, PROCESS FOR PRODUCTION OF DENSE SODA, LIGHT SODA, SODIUM BICARBONATE AND SODIUM SILICATE FROM SOLUTIONS CONTAINING BICARBONATE,* U.S. Patent No . US2006182675 (A1

*17] KURTZ ANDREW D, SODIUM BICARBONATE PRODUCTION METHOD,* U.S. Patent No. US2004057892 (A1)

*[18]* Fernández-García A, Zarza E, Valenzuela L, Perez M. Parabolic-trough solar collectors and their applications. Renew Sustain Energy Rev 2010;14:1695-721.

*[19] Hal B. H. Cooper Robert E. Tang Donald E. Degling Thomas K. Ewan Sam M. Ewan, Process and apparatus for carbon capture and elimination of multi-pollutants in fuel gas from hydrocarbon fuel sources and recovery of multiple by-products, U.S. Patent No.* US20080250715A1

*[20] Surendra Saxena ,Hydrogen Production and Carbon Sequestration in Coal and Natural Gas-Burning Power Plants, U.S. Patent No.* US20100028241A1

*[21] Surendra Saxena, Hydrogen production with carbon sequestration in coal and/natural gas-burning power plants, WO Patent No.* WO2009029292A1

*22] Joe David Jones, Carbon dioxide sequestration by formation of Group 2 carbonates and silicon dioxide, WO Patent No.* WO2011075680A1

*[23] Joe Jones, Removing carbon dioxide from waste streams through co-generation of carbonate and/or bicarbonate minerals, U.S. Patent No.* US20060185985A1

*[24] Kurt Z. House Christopher H. House Michael J. Aziz Daniel Paul Schrag, Carbon Dioxide Capture and Related Processes, U.S. Patent No.* US20100051859A1

**DESCRIPTION OF THE FIGURES**

Figure 1. Schematic representation of the invention with representation of the different solid and gas streams and interaction between the $CO_2$ capture and $NaHCO_3$ generation subsystems.
Figure 2. Schematic representation of the $CO_2$ capture and storage subsystem using the dry carbonation process. The figure illustrates a possible configuration for the $CO_2$ capture subsystem. The different reaction processes units, heat exchange and product separation are shown.

| Components | Meaning |
|---|---|
| 1. | Power plant |
| 2. | Water-Flue gases heat exchanger |
| 3. | $CO_2$ capture reactor |
| 4. | Solid-gas separator |

(continued)

| Components | Meaning |
|---|---|
| 5. | Heat exchanger $NaHCO_3$-$Na_2CO_3$ |
| 6. | Sorbent Regenerator |
| 7. | Solid-gas separator |
| 8. | $CO_2$ cooler (20°C) |
| 9. | $CO_2$ compressor (1-10 bar) |
| 10. | $CO_2$ cooler (20°C) |
| 11. | $CO_2$ compressor (10-25 bar) |
| 12. | $CO_2$ cooler (20°C) |
| 13. | $CO_2$ compressor (25-75 bar) |
| 14. | $CO_2$ cooler (20°C) |
| Flows | Meaning |
| F1. | Flue gases at the power plant exhaust |
| F2. | Water for the $CO_2$ capture reactor |
| F3. | Make-up of the sorbent needed in each cycle |
| F4. | Product at the exit of the carbonator |
| F5. | Flue gases at the exit of the carbonator |
| F6. | Solids at the carbonator outlet (60°C) |
| F7. | Solids at regenerator input (140°C) |
| F8. | $CO_2$ recovered from the system |
| F9. | Regenerated $Na_2CO_3$ (80°C) |
| F10. | Regenerated $Na_2CO_3$ (200°C) |
| F11. | $CO_2$ to the storage system (20 °C, 75 bar) |

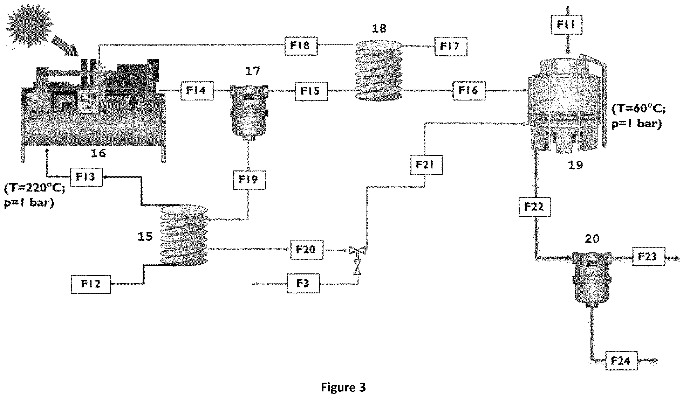

Figure 3. Schematic representation of the sodium bicarbonate production subsystem. The figure illustrates a possible configuration for the production of $NaHCO_3$. Use of natural Trona mineral and $CO_2$ from the capture subsystem (CO2 EN). Excess Na2C03 is sent to the capture subsystem for sorbent mak-up. The different reaction processes units, heat exchange and product separation are shown.

| Components | Meaning |
|---|---|
| 15. | Heat exchanger Trona - $Na_2CO_3$ |
| 16. | Fluidized bed reactor |
| 17. | Solid-gas separator |
| 18. | Heat exchanger Water - Water + $CO_2$ |
| 19. | $CO_2$ capture and production reactor $NaHCO_3$ |
| 20. | Solid-liquid separator |
| Flows | Meaning |
| F12. | Crushed trona |
| F13. | Hot trona at fluidized bed reactor inlet (125°C) |
| F14. | Product at the outlet of the fluidized bed reactor |

(continued)

| Flows | Meaning |
|-------|---------|
| F15. | $CO_2$ and steam (220°C) |
| F16. | $CO_2$ and water (95 °C) |
| F17. | Water (35 °C) |
| F18. | Superheated steam (205°C) |
| F19. | $Na_2CO_3$ hot (220°C) |
| F20. | $Na_2CO_3$ cooled (40 °C) |
| F3. | Make up of the sorbent needed at each cycle |
| F21. | Product inlet to the $NaHCO_3$ production reactor |
| F11. | $CO_2$ capture system |
| F22. | Product at the exit of the $NaHCO_3$ production reactor. |
| F23. | Process water |
| F24. | $NaHCO_3$ system product |

## DETAILED DESCRIPTION OF THE INVENTION

The present invention refers to an integrated system of production of sodium bicarbonate ($Na_2HCO_3$) from $CO_2$ captured by a dry carbonation process from trona ($Na_2CO_3$ - $NaHCO_3$ - $2H_2O$) as raw material and converting it into sodium carbonate ($Na_2CO_3$). Part of $Na_2CO_3$ is recycled as sorbent in the $CO_2$ capture process and the rest is used together with part of the captured $CO_2$ for the production of sodium bicarbonate as a commercially valuable chemical.

The optimized integration of the system allows the coupling of a medium-temperature heat supply system, which can be based on medium-temperature solar thermal energy or on biomass, capable of satisfying the heat needs of the integrated unit, thereby minimizing the energy consumption of the $CO_2$ capture system and the production of bicarbonate. This optimized integration reduces the energy and, above all, the economic penalty of $CO_2$ capture. Depending on the configuration adopted, the thermal energy to be provided for $CO_2$ capture is of the order of 915 kWhth per ton of $CO_2$ captured, while the thermal energy consumption for the conversion of $CO_2$ to sodium bicarbonate would have a thermal energy consumption of the order of 250 kWhth per ton of $NaHCO_3$ produced. To these consumptions is added the energy consumption associated with the compression of $CO_2$ for storage, which in the case of an increase in pressure from atmospheric pressure to 75 bar is of the order of 112 kWh$_{el}$ per tonne of $CO_2$.

The proposed system is composed of two subsystems, one associated with the dry carbonation process for $CO_2$ capture, based on the use of sodium carbonate as a $CO_2$ sorbent and another related to the production of sodium bicarbonate from trona.

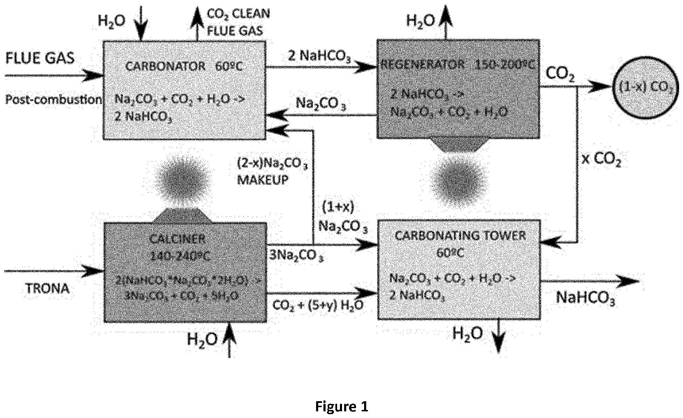

The conceptual scheme of the integrated system is shown in figure 1 that illustrates the logical structure of streams integration between both processes of capture and generation of sodium bicarbonate with part of the captured $CO_2$. The process also allows regeneration and control of the amount of captured $CO_2$ and recirculated $Na_2CO_3$ to optimize the mode of operation, energy consumption and economic return of the system as a whole.

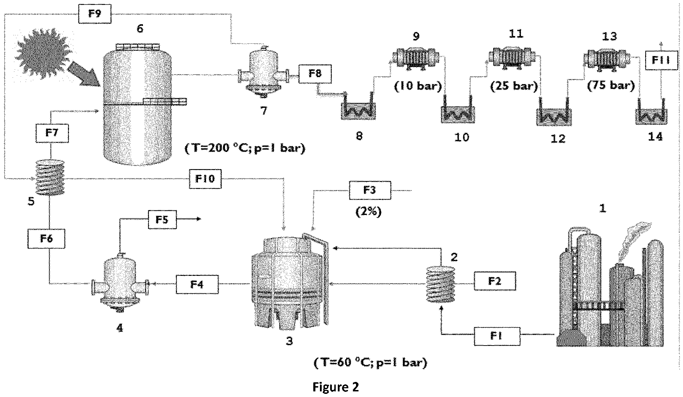

The main units of the first subsystem ($CO_2$ capture) are shown in Figure 2. They are a $CO_2$ capture reactor (carbonator), a desorption reactor (regenerator), two separation units, heat exchangers for heat recovery, a water condensation unit at the end of the process and compressors for pure $CO_2$.

The elements that make up the second subsystem, conversion from $CO_2$ to sodium bicarbonate, (figure 3) use similar units: a fluid bed reactor for the conversion of trona into sodium carbonate, a carbonation tower for the production of sodium bicarbonate, two separation units and heat exchangers for heat recovery and energy optimization of the processes.

In the $CO_2$ capture subsystem (Figure 2), combustion gases from a fossil fuel power plant or an industrial application are sent to the carbonation tower. In the carbonator, $CO_2$, $H_2O$ and $Na_2CO_3$ react exothermically to form $NaHCO_3$. This reactor operates at low temperature (T = 60 °C) and atmospheric pressur e (p = 1 atm), so the released heat can be used for low temperature thermal storage. The system integrates a separator that divides the bicarbonate solution stream from the residual flue gas stream. With this configuration 90% of $CO_2$ input can be captured. The outgoing bicarbonate stream is sent to a regenerator. In it, the inverse (endothermic) reaction takes place, leading to the formation of $Na_2CO_3$, $H_2O$ and $CO_2$ from $NaHCO_3$. This heat can be supplied by a moderate temperature source of both fossil and renewable origin. In order not to introduce new $CO_2$ emissions from fossil fuels, heat can be supplied either from biomass or from solar energy by means of a system based on parabolic troughs that are particularly suitable for medium temperature (200 °C) operation. In the regenerator the output streams are separated: $Na_2CO_3$ is sent back to the carbonation tower, while the $CO_2$ not used in the generation of bicarbonate is sent to a stage of water condensation and subsequent compression for storage. Intermediate cooling is required to reduce the power required by the compression process. The system will need some sorbent to replace deactivated $Na_2CO_3$ with irreversible reactions associated with the $SO_2$ and HCl reaction normally present in flue gases.

The second subsystem (Fig. 2) uses a fraction of the $CO_2$ captured in the first subsystem and trona to produce $NaHCO_3$. Ground trona ore is introduced into the fluidized bed reactor along with superheated steam at 200°C. The fluidized bed reactor operates in the range of 200-220°C and atmospheric pressure. Un der these operating conditions the trona becomes $Na_2CO_3$. An additional flow of $CO_2$ and steam is generated during the conversion of the trona which is separated from the $Na_2CO_3$ flow. Part of the flow of $Na_2CO_3$ is sent to the capture subsystem by dry carbonate as a fresh replacement sorbent, while the rest is sent to a carbonation tower along with the $CO_2$ and $H_2O$ stream, and additional pure $CO_2$ from the capture subsystem (Fig. 1) in order to produce $NaHCO_3$, a product with added value for the chemical industry and suitable for sale.

In the proposed invention $CO_2$ from fossil fuel power plants (coal, natural gas or fuel oil), or from industrial processes (refineries, cement plants, metallurgical industry, etc.) is captured through the dry carbonate process using as raw material a mineral abundant in nature and relatively low cost (trona ore).

The optimized integration of $CO_2$ capture and sodium bicarbonate production results in a synergistic configuration in terms of energy consumption and associated costs of $CO_2$ capture processes and conversion to high value-added chemical (sodium bicarbonate). The integration of both presents an energy penalty of the power plant (or $CO_2$ emitting industry to which it is applied) moderate compared to that it has with other $CO_2$ capture systems. This energy penalty is associated with the extra energy consumed in the processes. The heat supplied both in the sorbent regenerator in the $CO_2$ capture subsystem and in the fluidized bed reactor in the sodium bicarbonate production subsystem may originate from both fossil fuel, with the corresponding penalty in terms of additional $CO_2$ emissions and cost of operation, or from renewable sources that allow virtually zero $CO_2$ emissions. This can be achieved either by the use of biomass or by solar energy at medium temperature. In both cases and thanks to the optimization of subsystem integration made in this invention in terms of operating conditions and fraction of $CO_2$ captured in the exhaust gas used for the production of a chemical product with added value ($NaHCO_3$). In addition, the process itself generates the replacement sorbent for the capture process in the plant. Therefore there is a synergy of the integrated whole against the behaviour of the isolated systems. This translates into a clear energy, environmental and economic benefit from the integration of systems that cannot be expected from the analysis of their isolated behaviour and with a clear advantage over other capture systems (or $CO_2$ capture and use).

The $CO_2$ capture and storage subsystem shown in Fig. 2 uses a solid-solid heat exchanger (HEATEXCH) between the two reactors to reduce the total amount of heat required in the regenerator. This heat exchanger allows an increase of the temperatures in the regenerator, which improves the reaction speed, with a small additional expenditure of thermal energy. Figure 3 shows the schematic of a possible configuration for sodium bicarbonate production. Before entering the fluidized bed reactor, the trona, under ambient conditions, passes through a solid-solid heat exchanger (HEATEXT) where it exchanges heat with the $Na_2CO_3$ stream leaving the fluidized bed reactor. Another heat exchanger (HEATEXW) is used to heat the water entering the fluid bed from the gases coming out of it, which allows superheated steam to be supplied to the reactor.

The synergy obtained by integrating both systems is reflected in the flow diagram in Figure 1.

- For the production of $NaHCO_3$ from trona, the necessary $CO_2$ is supplied by the $CO_2$ capture subsystem (x*CO2 in the diagram). Therefore, part of the captured $CO_2$ is used and the rest is stored, giving rise to a new application of CCUS (Carbon Dioxide Capture, Utilization and Storage) not identified to date.

- In order to capture $CO_2$ in the dry carbonate process, a contribution of fresh $Na_2CO_3$ is required, which with the proposed integration is supplied by the Trona production subsystem (MAKEUP in figure 1). This makes the $CO_2$ capture system substantially cheaper, which is novel.

The advantages of this technology are:

- $CO_2$ capture technology in fossil fuel thermal plants and in industrial plants with reduced energy and economic penalties of the whole system.
- $CO_2$ capture technology and conversion to chemical product with added value, sodium bicarbonate, both for thermal fossil fuel plants and for other $CO_2$ emitting industrial plants with a significant economic return because the effect of energy penalty is supplemented by the sale of $NaHCO_3$. It also generates the amount of fresh sorbent that needs to be replenished due to its deactivation.

- A fraction of the captured $CO_2$ is integrated into the production of sodium bicarbonate, which reduces/eliminates storage requirements. This increases the sustainability of the $CO_2$ capture process.
- In the case of integration of renewable energy source (biomass or solar medium temperature) a global system of almost zero $CO_2$ emissions is obtained both for fossil fuel power plants and for other industrial plants. It includes industrial sectors such as coal, steel, cement.
- It allows optimizing the configuration of the integration and the fraction of recirculated $Na_2CO_3$ and stored $CO_2$ in the form of bicarbonate according to the production requirements from the environmental point of view according to the characteristics of the integration.
- It can be incorporated into existing thermal and industrial plants without any relevant penalty for their performance.

## EXAMPLE OF THE INVENTION

As an example of the invention, the process of producing sodium bicarbonate using $CO_2$ captured by a dry carbonation process in a coal-fired power plant (150 MWel) is shown. The combustion gases of the plant have a concentration of $CO_2$ (~ 15% vol). The main data for the coal-fired power plant are shown in Table 1.

Table 1: Data from the invention example. Reference thermal power station. 150 MWel coal plant

| Item | Magnitude | Units |
|---|---|---|
| Coal consumption | 61 | ton/hr |
| Air Flow | 692 | ton/hr |
| Gross input power | 447 | $MW_{th}$ |
| Net input power | 397 | $MW_{th}$ |
| Net power produced | 150 | $MW_{el}$ |
| Net yield | 33,5 | % |

Table 2 shows the molar fluxes of the combustion gases taken to illustrate the invention.

Table 2: Composition of the exhaust gases in the reference coal-fired power plant

| Compound at the output stream | Mole flow(kmol/hr) | Mass expenditure (tons/hr) |
|---|---|---|
| N2 | 17154,21 | 529,71 |
| $CO_2$ | 3085,62 | 135,96 |
| H2O | 1471,86 | 29,4 |
| O2 | 781,8 | 27,57 |
| CO | 140,7 | 3,93 |
| NO | 135,36 | 4,47 |
| SO | 37,53 | 2,64 |

Other parameters used in the analysis are shown in Table 3 while Table 4 shows the energy consumption associated with the different components.

Table 3: Reference parameters for the invention example

| Regenerator temperature | 200 | °C |
|---|---|---|
| Fluidized Bed Reactor Temperature | 220 | °C |
| Carbonation Temperature and | 60 | °C |
| $Na_2CO_3$ Activity | 0.75 | |
| Minimal temperature difference in heat exchangers | 15 | °C |

(continued)

| Transport consumption of solids | 5,5 | kwh$_{el}$/tn |
| --- | --- | --- |
| Reference solar hours | 12 | |
| Isentropic performance of compressors | 0.9 | |
| CO$_2$ storage pressure | 75 | bar |

Table 4: Energy consumption in the reference plant of the invention example with the CO$_2$ capture system and production of NaHCO$_3$.

| | Generated power | Power consumption |
| --- | --- | --- |
| CFFP | 150 MW$_{el}$ | 447 MW$_{th}$ |
| Regenerating Heat | | 114 MW$_{th}$ |
| CO$_2$ compression power | | 13.3 MW$_{el}$ |
| Power for transport of solids | | 2.47 MW$_{el}$ |
| Net power | 134.23 MW$_{el}$ | |
| Fluidized Bed Reactors | | 51 MW$_{th}$ |
| Total heat required | | 612 MW$_{th}$ |

The capture subsystem has a yield of 90%. It uses 430 tons / hr of Na$_2$CO$_3$ as a sorbent to remove 125 tons / hr of CO$_2$ in a continuous cycle. The replacement sorbent flow is close to 3 ton/hr. As shown in Table 4, the heat required for sorbent regeneration after CO$_2$ capture is 114 MW$_{th}$. The energy consumption for the compression of CO$_2$ and the transport of solids amounts to 16 MW$_{el}$. The total efficiency of the integrated plant (coal combustion plant + capture) considering the required heat input the power consumed is reduced from 33.5% to 24%. Considering only the effect of the power required for compression and transport, for this example the reduction in the available electrical energy is 10% which has an effect on the overall efficiency of 3%. Considering that the temperatures in the reactors allow the integration of solar energy input, the whole system could operate with a penalty on the economic performance (available energy/purchased energy) lower than 3% achieving almost zero emissions.

In the NaHCO$_3$ production subsystem (Fig 3), the heat required in the fluidized bed reactor to decompose 192 ton / hr (53.3 kg / sec) of trona is 51 MWth at T = 220 °C to produce 135.5 ton / hr of Na$_2$CO$_3$ (plus 18.5 ton / hr of CO$_2$ and 40 ton / hr of water). As a replacement sorbent for the CO$_2$ capture process 3 tn / h of Na$_2$CO$_3$ are used. The rest, (132.5 ton/hr) is sent to the carbonation tower where it reacts with 37.5 ton / hr of CO$_2$ from the CO$_2$ capture system (in addition to CO$_2$ effluent from the fluidized bed) to produce NaHCO$_3$. From the reaction Na$_2$CO$_3$ + H$_2$O + CO$_2$ → 2NaHCO$_3$ it results that 207.5 ton / hr of NaHCO$_3$ are produced with a total flow of approximately 95 m$^3$ / hr. In this way, a chemical product of high economic value (NaHCO$_3$) is obtained from a relatively low-cost and abundant raw material such as trona and from part of the captured CO$_2$ (from thermal power stations or industrial processes). This integrated process of capture and conversion to NaHCO$_3$ reduces (and eliminates depending on the mode of operation chosen) the need for total storage of CO$_2$, with the requirements of compression system and energy penalty that entails.

The overall performance of the system, and the available/required electrical power is reduced by the integration of the production of sodium bicarbonate, which in turn captures CO$_2$ that does not need to be compressed. The economic income associated with the new product compensates for the penalty associated with this process. The total heat requirements are increased by taking into account the 51 MW thermal required in the fluidized bed reactor.

**Claims**

**1.** Integrated CO$_2$ capture system and production of sodium bicarbonate (Na$_2$HCO$_3$) **characterized by** the integration of:

      a. CO$_2$ capture through a dry carbonation process
      b. Conversion of trona (Na$_2$CO$_3$ - NaHCO$_3$ - 2H$_2$O) into sodium carbonate (Na2C03)
      c. Generation of sodium bicarbonate from the Na$_2$CO$_3$ generated and the CO$_2$ captured.

**2.** Integrated $CO_2$ capture system and $NaHCO_3$ generation according to claim 1 characterized because it is integrated in the output current of fossil fuel thermal plants and in $CO_2$ emitting industrial installations.

**3.** Integrated system of $CO_2$ capture and generation of $NaHCO_3$ according to claim 1 characterized because the subsystem of $CO_2$ capture uses the dry carbonation process.

**4.** Integrated system according to the claims 1 to 3 **characterized by** the contribution of heat at medium temperature (140 -230 °C) for the regeneration of sorbent and dissociation of the trona in the process of $CO_2$ capture can come from renewable energy, solar thermal technology of medium temperature or biomass.

**5.** Integrated system of $CO_2$ capture and generation of $NaHCO_3$ according to claims 1 to 4 characterized because it allows generating near-zero $CO_2$ emissions systems, with an efficiency of capture above 90% in technologies based on fossil fuel, through the support of renewable energies. For coal plants the additional heat required is of the order of 10% of the total heat supplied to the global system.

**6.** Integrated $CO_2$ capture system and generation of $NaHCO_3$ according to claims 1 to 5 characterized because the required $CO_2$ for the production of $NaHCO_3$ from Trona is supplied by the $CO_2$ capture subsystem.

**7.** Integrated $CO_2$ capture system and $NaHCO_3$ generation according to claim 6 characterized because the $CO_2$ needed for the production of sodium bicarbonate comes from the captured $CO_2$ and in turn the conversion to sodium bicarbonate permanently fixes the captured $CO_2$

**8.** Integrated system of $CO_2$ capture and generation of $NaHCO_3$ according to claims 1 to 7 characterized because it internally generates the fresh sorbent ($Na_2CO_3$) that must be replaced to keep the $CO_2$ capture process active and allows the generation of the $Na_2CO_3$ needed in the make up for the dry carbonation process from the calcination of the trona to produce bicarbonate.

**9.** Integrated $CO_2$ capture system and $NaHCO_3$ generation according to claims 1 to 8 characterized because it reduces the energy requirements of the whole integrated system due to the composition and temperature of the streams in sodium carbonate regenerator in the process of $CO_2$ capture and trona calciner (150-220 ºC), and in both carbonation towers (60 ºC).

**Figure 1**

F9

6

F8

9
11
13

(10 bar)
(25 bar)
(75 bar)

F11

7

8
10
12
14

F7

( T=200 °C; p=1 bar)

5

F10

F3

1

(2%)

F6

F5

2

F4

F2

4

3

FI

( T=60 °C; p=1 bar)

Figure 2

**Figure 3**

# EP 3 485 963 A1

## INTERNATIONAL SEARCH REPORT

| | International application No. |
|---|---|
| | PCT/ES2017/000091 |

### A. CLASSIFICATION OF SUBJECT MATTER

*B01D53/62* (2006.01)
*C01D7/10* (2006.01)
According to International Patent Classification (IPC) or to both national classification and IPC

### B. FIELDS SEARCHED

Minimum documentation searched (classification system followed by classification symbols)
B01D, C01D

Documentation searched other than minimum documentation to the extent that such documents are included in the fields searched

Electronic data base consulted during the international search (name of data base and, where practicable, search terms used)

INVENES, EPODOC, WPI, BIOSIS

### C. DOCUMENTS CONSIDERED TO BE RELEVANT

| Category* | Citation of document, with indication, where appropriate, of the relevant passages | Relevant to claim No. |
|---|---|---|
| A | NELSON TO et al.: "The Dry Carbonate Process: "Carbon dioxide recovery from power plant flue gas", 2009, Energy Procedia, vol. 1, pp.: 1305–1311, the whole document, doi:10.1016/j.egypro.2009.01.171. | 1-9 |
| A | WO 2009029292 A1 (SAXENA SURENDRA) 05/03/2009, the whole document; in particular, claims. | 1-9 |
| A | US 2012275987 A1 (HIZA MICHAEL D ET AL.) 01/11/2012, the whole document; in particular, claims. | 1-9 |
| A | WO 2007003013 A1 (PERMA CARB PTY LTD ET AL.) 11/01/2007, the whole document; in particular, claims. | 1-9 |

☒ Further documents are listed in the continuation of Box C.   ☒ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance. | |
| "E" | earlier document but published on or after the international filing date | |
| "L" | document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" | document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" | document published prior to the international filing date but later than the priority date claimed | |
| | | "&" document member of the same patent family |

| Date of the actual completion of the international search | Date of mailing of the international search report |
|---|---|
| 04/12/2017 | **(12/12/2017)** |

| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>A. Maquedano Herrero<br><br><br>Telephone No. 91 3495474 |

Form PCT/ISA/210 (second sheet) (January 2015)

**INTERNATIONAL SEARCH REPORT**

International application No.

PCT/ES2017/000091

C (continuation). DOCUMENTS CONSIDERED TO BE RELEVANT

| Category * | Citation of documents, with indication, where appropriate, of the relevant passages | Relevant to claim No. |
|---|---|---|
| A | KNUUTILA H et al.: "$CO_2$ capture from coal-fired power plants based on sodium carbonate slurry; a systems feasibility and sensitivity study", 2009, International Journal of Greenhouse Gas Control, vol. 3, pp.: 143 – 151, the whole document, doi:10.1016/j.ijggc.2008.06.006. | 1-9 |

Form PCT/ISA/210 (continuation of second sheet) (January 2015)

EP 3 485 963 A1

## INTERNATIONAL SEARCH REPORT

Information on patent family members

| International application No. |
|---|
| PCT/ES2017/000091 |

| Patent document cited in the search report | Publication date | Patent family member(s) | Publication date |
|---|---|---|---|
| WO2009029292 A1 | 05.03.2009 | US2010028241 A1<br>US2009202413 A1<br>US8012453 B2 | 04.02.2010<br>13.08.2009<br>06.09.2011 |
| US2012275987 A1 | 01.11.2012 | WO2012005867 A1<br>US2011277474 A1 | 12.01.2012<br>17.11.2011 |
| WO2007003013 A1 | 11.01.2007 | US2009214408 A1<br>ZA200800081 B<br>CN101252982 A<br>CN101252982B B<br>EP1899043 A1<br>EP1899043 A4<br>CA2613096 A1<br>CA2613096 C<br>AU2006265694 A1<br>AU2006265694B B2 | 27.08.2009<br>31.12.2008<br>27.08.2008<br>25.06.2014<br>19.03.2008<br>23.03.2011<br>11.01.2007<br>21.08.2012<br>11.01.2007<br>18.03.2010 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2409084 A1
- US 2015175434 A1
- US 2013095011 A1
- WO 2013106294 A1
- US 2011064637 A1
- US 2009238740 A1
- US 2006182675 A1
- US 2004057892 A1
- US 20100028241 A1
- WO 2009029292 A1
- WO 2011075680 A1
- US 20060185985 A1
- US 20100051859 A1
- US 4459272 A
- US 1992006321 W
- WO 1993011070 A
- US 3869538 A
- US 6010672 A
- US 20080250715 A1

**Non-patent literature cited in the description**

- **SPIGARELLI BP ; KAWATRA SK.** Opportunities and challenges in carbon dioxide capture. *J CO2 Util,* 2013, vol. 1, 69-87
- **NELSON, T. O. ; COLEMAN, L. J. ; GREEN, D. A. ; GUPTA, R. P.** The dry carbonate process: carbon dioxide recovery from power plant flue gas. *Energy Procedia,* 2009, vol. 1 (1), 1305-1311
- **HARRIS RE.** *Fifty Years of Wyoming Trona Mining,* 1997, 177-82
- **GÄRTNER RS ; WITKAMP GJ.** Wet calcining of trona (sodium sesquicarbonate) and bicarbonate in a mixed solvent. *J Cryst Growth,* 2002, vol. 237, 2199-204
- **KIM NK ; SRIVASTAVA R ; LYON J.** *Simulation of an industrial rotary calciner with trona ore decomposition,* 2002
- **FERNÁNDEZ-GARCÍA A ; ZARZA E ; VALENZUELA L ; PEREZ M.** Parabolic-trough solar collectors and their applications. *Renew Sustain Energy Rev,* 2010, vol. 14, 1695-721